# EUROPÄISCHE PATENTSCHRIFT

(11) **EP 0 544 062 B1**
(45) Veröffentlichungstag und Bekanntmachung des Hinweises auf die Patenterteilung: **01.03.1995**
(21) Anmeldenummer: 92114435.8
(22) Anmeldetag: 25.08.1992
(51) Int. Cl.: F16K 1/22, F02D 9/10, E05D 7/10

(54) **Drosseleinheit**
Throttle assembly
Ensemble d'étranglement

(30) Priorität: 05.11.1991 DE 9113727 U
(43) Veröffentlichungstag der Anmeldung: 02.06.1993
(73) Patentinhaber: FILTERWERK MANN & HUMMEL GMBH, D-71631 Ludwigsburg (DE)
(72) Erfinder: Müller, Manfred, W-7141 Freiberg (DE); Winter, Manfred, W-7101 Oedheim (DE)
(74) Vertreter: Voth, Gerhard, Dipl.-Ing.

(56) Entgegenhaltungen:
- EP-A- 0 089 104
- EP-A- 0 373 097
- US-A- 4 715 581

## Beschreibung

Die Erfindung betrifft eine Drosseleinheit miteinem Scharnier, wobei ein erstes Teil mit Lagerbohrungen und ein zweites Teil mit elastischen Lagerzapfen versehen ist.

Derartige Scharniere sind bekannt, z. B. in Schachteln für Musikkassetten. Will man derartige Scharniere z. B. in Ansaugkanälen mit Drosselklappen verwenden, so ist daran nachteilig, daß man den Kanalquerschnitt elastisch ausgestalten müßte. Dies wäre sicherlich umständlich und teuer. Man könnte nun auch ein teilbares und anschließend abzudichtendes Gehäuse vorsehen, um die Drosselklappe zu montieren. Dies ist aber einmal kostenaufwendig in der Herstellung, es würde das Scharnier verteuern. Eine andere Möglichkeit wäre, die Drosselklappe mit einer Durchsteckachse zu montieren. Dies wäre aber umständlich in der Montage und erfordert das nachträgliche Abdichten des Ansaugkanals.

Dokument US-A-4715581 weist eine Drosseleinheit auf, welche dem Oberbegriff des Anspruchs 1 entspricht.

Es ist somit Aufgabe der Erfindung, eine Drosseleinheit der eingangs genannten Art dahingehend zu verbessern, daß ein einfaches, billiges und leicht zu montierendes bzw. demontierendes Scharnier geschaffen wird. Erfindungsgemäß wird diese Aufgabe durch die Merkmale des kennzeichnenden Teils des Anspruchs 1 gelöst.

Beim Einschnappen der Lagerzapfen nehmen diese ihre ursprünglichen räumlichen Positionen wieder ein und wirken unterstützt durch die Gesamtstabilität des zweiten Teiles einer zufälligen Demontage entgegen. Andererseits ist diese "Verriegelung" infolge der Eigenelastizität des Werkstoffs, z. B. Kunststoff, so nachgiebig, daß mit in der richtigen räumlichen Richtung aufgebrachtem Druck gegen die Lagerzapfenhalterung das zweite Teil beliebig oft demontiert bzw. montiert werden kann.

Vorteilhafte Weiterbildungen der Erfindung ergeben sich aus den Unteransprüchen.

Ein Ausführungsbeispiel der Erfindung und ihrer vorteilhaften Weiterbildungen wird im folgenden unter Bezugnahme auf die beigefügten Zeichnungen näher beschrieben. Es stellen dar:

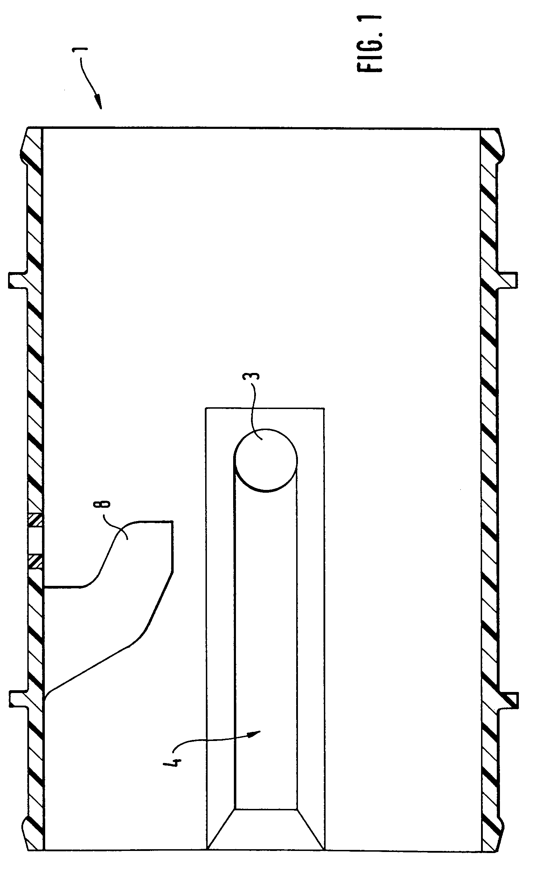

- Figur 1: einen Schnitt durch das erste Teil des Scharniers,

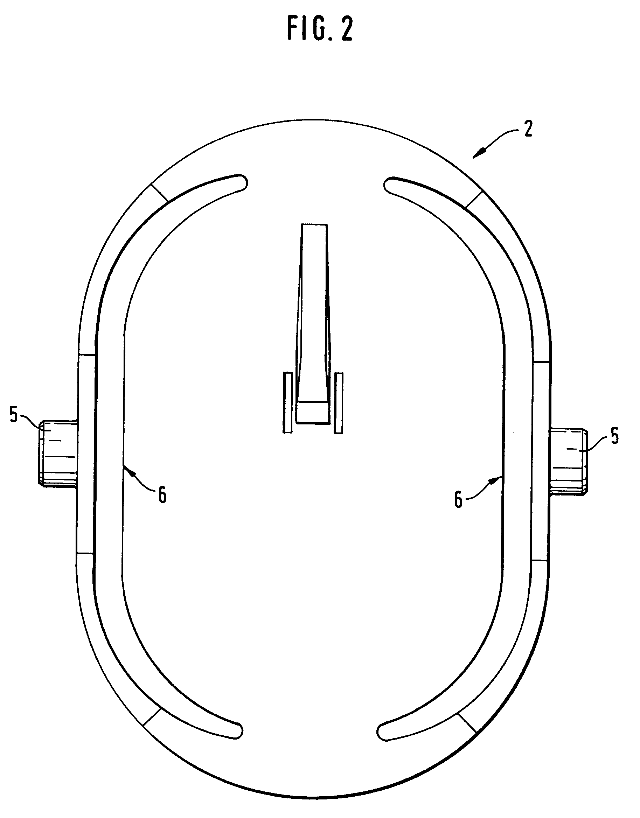

- Figur 2: eine Draufsicht des zweiten Teils des Scharniers,

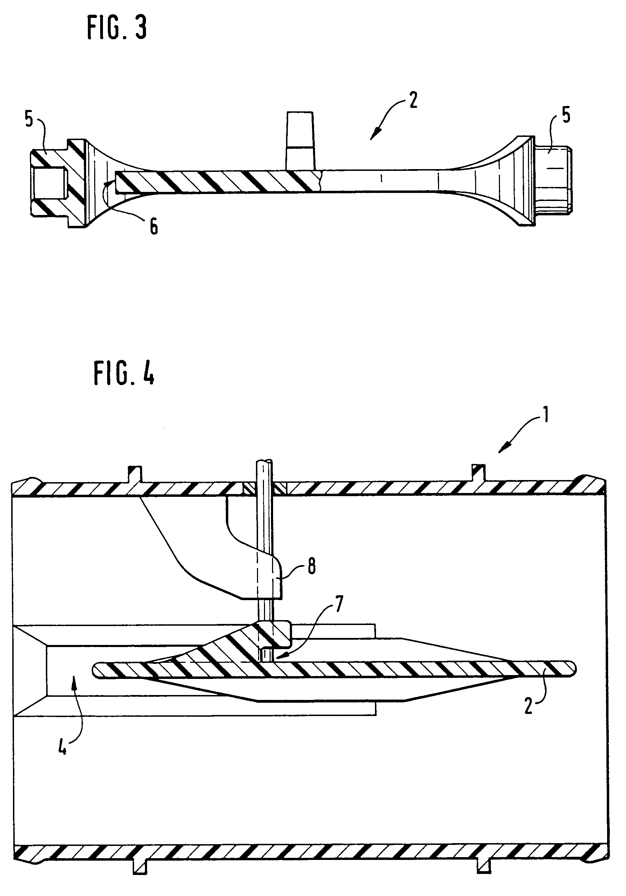

- Figur 3: einen Schnitt durch das zweite Teil des Scharniers.
- Figur 4: einen Schnitt durch das montierte Scharnier.

Das Scharnier besteht aus einem ersten Teil 1 und einem zweiten Teil 2, die aus Kunststoff hergestellt sind. Das erste Teil 1 ist mit Lagerbohrungen 3 versehen, zu denen Montagenuten 4 führen. Das zweite Teil 2 ist mit elastischen Lagerzapfen 5 versehen. Die elastischen Lagerzapfen 5 werden durch einen extra zu dem Zweck vorgesehenen Anschlag 6 in ihrer Beweglichkeit eingeschränkt und so vor überbelastung und Zerstörung bewahrt. Das zweite Teil 2 verfügt über eine Steuerungsanlenklagerstelle 7, über die das zweite Teil 2 im Betrieb Lageänderungen vornimmt, die durch einen Drosselklappenanschlag begrenzt werden.

### Bezugszeichenliste

- 1: erstes Teil
- 2: zweites Teil
- 3: Lagerbohrungen
- 4: Montagenuten
- 5: elastische Lagerzapfen
- 6: Anschlag
- 7: Steuerungsanlenklager
- 8: Drosselklappenanschlag

## Patentansprüche

1. Drosseleinheit, wobei ein erstes Teil (1), das einen geschlossenen Rohrquerschnitt aufweist, mit Lagerbohrungen (3) versehen ist, dadurch gekennzeichnet, daß ein zweites Teil (2), eine Drosselklappe, über mit an der Drosselklappe elastisch verbundene Lagerzapfen (5) verfügt, die durch die Verformung der Drosselklappe, die eine Verschiebung der Lagerzapfen entlang ihrer gemeinsamen Längsachse bewirkt und wobei diese Verschiebung parallel zur Fläche der Drosselklappe erfolgt, in die Lagerbohrungen (3) des ersten Teils (1) federnd einschnappen.

2. Drosseleinheit nach Anspruch 1, dadurch gekennzeichnet, daß die räumliche Beweglichkeit der Lagerzapfen (5) des zweiten Teils (2) durch einen durch Anschlag (6) begrenzten Federweg eingeschränkt ist, wobei der Anschlag ein Teil der Drosselklappe ist.

3. Drosseleinheit nach einem oder mehreren der vorgenannten Ansprüche, dadurch gekennzeichnet, daß am ersten Teil (1) Montagenuten (4) angebracht sind, die das Auffinden der Lagerbohrungen (3) vereinfachen.

4. Drosseleinheit nach einem oder mehreren der vorgenannten Ansprüche, dadurch gekennzeichnet, daß sich am zweiten Teil (2) eine Steuerungsanlenklagerstelle (7) befindet.

5. Drosseleinheit nach einem oder mehreren der vorgenannten Ansprüche, dadurch gekennzeichnet, daß die Lagerzapfen (5) des zweiten Teils (2) beidseitig angebunden sind.

6. Drosseleinheit nach einem oder mehreren der vorgenannten Ansprüche, dadurch gekennzeichnet, daß die Lagerzapfen (5) des zweiten Teils (2) symmetrisch angebunden sind.

7. Drosseleinheit nach einer oder mehreren der vorgenannten Ansprüche, dadurch gekennzeichnet, daß die Lagerzapfen (5) des zweiten Teils (2) in ihrer räumlichen Position nur axial verschiebbar sind.

## Claims

1. Throttle assembly, wherein a first section (1), which has a closed tubular cross-section, is provided with bearing bores (3), characterised in that a second section (2), a throttle valve, has journals (5), which are resiliently connected to the throttle valve and snap resiliently into the bearing bores (3) in the first section (1) as a result of the deformation of the throttle valve, which permits a displacement of the journals along their common longitudinal axis, and wherein this displacement is effected parallel to the face of the throttle valve.

2. Throttle assembly according to claim 1, characterised in that the spatial displaceability of the journals (5) of the second section (2) is limited by a travel stroke defined by stop member (6), the stop member being part of the throttle valve.

3. Throttle assembly according to one or more of the above-mentioned claims, characterised in that assembly grooves (4), which simplify the location of the bearing bores (3), are provided in the first section (1).

4. Throttle assembly according to one or more of the above-mentioned claims, characterised in that a pivotal control bearing position (7) is situated on the second section (2).

5. Throttle assembly according to one or more of the above-mentioned claims, characterised in that the journals (5) of the second section (2) are connected on each side.

6. Throttle assembly according to one or more of the above-mentioned claims, characterised in that the journals (5) of the second section (2) are symmetrically connected.

7. Throttle assembly according to one or more of the above-mentioned claims, characterised in that the journals (5) of the second section (2) are only axially displaceable in their spatial position.

## Revendications

1. Unité d'étranglement, dans laquelle une première partie (1) est pourvue d'alésages pour paliers (3), caractérisée en ce qu'elle présente une section transversale tubulaire fermée, une deuxième partie (2), un clapet d'étranglement, dispose de tourillons de paliers (5) reliés élastiquement au dessus du clapet d'étranglement, qui provoque par la déformation du clapet d'étranglement un déplacement des tourillons de paliers le long de leur axe longitudinal commun et ce déplacement ayant lieu parallèlement à la surface du clapet d'étranglement, dans laquelle des alésages pour paliers (3) de la première partie (1) s'encliquettent élastiquement.

2. Unité d'étranglement selon la revendication 1, caractérisée en ce que la mobilité dans l'espace des tourillons de paliers (5) de la deuxième partie (2) est limitée par une course de ressort limitée par une butée (6) la butée étant une partie du clapet d'étranglement.

3. Unité d'étranglement selon une ou plusieurs des revendications précédentes, caractérisée en ce que sur la première partie (1) sont disposées des rainures de montage (4), qui simplifient la découverte des alésages pour paliers (3).

4. Unité d'étranglement selon une ou plusieurs des revendications précédentes, caractérisée en ce que sur la deuxième partie (2) se trouve un point de palier articulé de commande (7).

5. Unité d'étranglement selon une ou plusieurs des revendications précédentes, caractérisée en ce que les tourillons de paliers (5) de la deuxième partie (2) sont attachés des deux côtés.

6. Unité d'étranglement selon une ou plusieurs des revendications précédentes, caractérisée en ce que les tourillons de paliers (5) de la deuxième partie (2) sont attachés symétriquement.

7. Unité d'étranglement selon une ou plusieurs des revendications précédentes, caractérisée en ce que les tourillons de paliers (5) de la deuxième partie (2) ne peuvent se déplacer qu'axialement dans leur position dans l'espace.
